(19) **Europäisches Patentamt European Patent Office Office européen des brevets**

(11) **EP 4 672 240 A1**

(12) **EUROPEAN PATENT APPLICATION**
published in accordance with Art. 153(4) EPC

(43) Date of publication:
**31.12.2025 Bulletin 2026/01**

(21) Application number: **24787936.4**

(22) Date of filing: **29.03.2024**

(51) International Patent Classification (IPC):
*G10L 25/51* (2013.01)  *G01M 13/045* (2019.01)
*G01M 13/028* (2019.01)

(52) Cooperative Patent Classification (CPC):
**G01M 13/028; G01M 13/045; G10L 25/51**

(86) International application number:
**PCT/CN2024/084972**

(87) International publication number:
**WO 2024/212831 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 10.04.2023  CN 202310372540
10.04.2023  CN 202320768609 U
10.04.2023  CN 202310376191
10.04.2023  CN 202310372548
10.04.2023  CN 202320777246 U
10.04.2023  CN 202320768785 U
10.04.2023  CN 202310372479
10.04.2023  CN 202310372444

(71) Applicants:
• **China Petroleum & Chemical Corporation**
**Beijing 100728 (CN)**
• **Sinopec Research Institute of Safety**
**Engineering Co., Ltd.**
**Qingdao, Shandong 266104 (CN)**

(72) Inventors:
• QIU, Feng
Qingdao, Shandong 266104 (CN)
• YANG, Zhe
Qingdao, Shandong 266104 (CN)
• QU, Dingrong
Qingdao, Shandong 266104 (CN)
• ZHU, Liang
Qingdao, Shandong 266104 (CN)
• LI, Mingjun
Qingdao, Shandong 266104 (CN)
• XIAO, Anshan
Qingdao, Shandong 266104 (CN)
• WANG, Haozhi
Qingdao, Shandong 266104 (CN)
• CHEN, Wenwu
Qingdao, Shandong 266104 (CN)
• XU, Shujian
Qingdao, Shandong 266104 (CN)
• SHEN, Zhiyuan
Qingdao, Shandong 266104 (CN)

(74) Representative: **Hoffmann Eitle**
**Patent- und Rechtsanwälte PartmbB**
**Arabellastraße 30**
**81925 München (DE)**

(54) **MOBILE FAULT DETECTION METHOD AND SYSTEM FOR MOVING DEVICE**

(57) Embodiments of the present invention relate to the technical field of fault detection, and provide a mobile fault detection method and system for a moving device. The method comprises: circularly acquiring detection signals in a device arrangement area; classifying the detection signals, and selecting a preset fault diagnosis model on the basis of a classification result; extracting features of the detection signals to obtain feature information; and training the selected fault diagnosis model on the basis of the feature information, and identifying a faulty device on the basis of a training result. The solution of the present invention realizes the mobile detection of a moving device, is a multi-signal-type fault detection solution, fully considers influence factors of a spatial position change of signal acquisition on the signal features, and improves the fault detection precision.

EP 4 672 240 A1

S10

Acquiring a detection signal in an equipment arrangement region in a circulative manner

S20

Classifying the detection signal, and selecting a preset fault diagnosis model based on a classification result

S30

Extracting a feature from the detection signal to obtain feature information

S40

Training a selected fault diagnosis model based on the feature information, and identify faulty equipment based on a training result

Fig. 1

**Description**

**Field of the Invention**

The disclosure relates to the technical field of fault detection, and in particular to a mobile fault detection method for mechanical equipment and a mobile fault detection system for mechanical equipment.

**Background of the Invention**

Mechanical equipment, a type of core power equipment for enterprise production, such as electric motor equipment and gear equipment is applied to the enterprise production in an extensive range. Since the stability of the equipment directly affects the stability of a production process, it is essential to inspect an operation state of the mechanical equipment during production. According to an existing fault detection technology for the mechanical equipment, a vibration state signal of the mechanical equipment during operation is acquired principally through manual routine inspection, and then a fault of the mechanical equipment is detected based on the vibration signal acquired. In addition to manual routine inspection, an online detection system based method for detecting a fault of mechanical equipment is also available at present. However, the method requires a large number of hardware equipment to be arranged. A high system construction cost will be generated because more hardware equipment has to be arranged for large-scale detection. It can be seen that an existing fault detection method for the mechanical equipment principally combines detection of the vibration signal at a fixed point and manual fault detection. However, as for a factory with a large equipment arrangement region, such a method will dramatically increase a manual investment cost and an equipment investment cost of fault detection for the mechanical equipment. Since it is difficult to ensure accuracy of fault detection based on the vibration signal, accuracy of fault detection in a traditional solution is also defective. It is a pressing issue to create a new method for detecting a fault of mechanical equipment, so as to solve a high implementation cost and low accuracy of an existing solution for detecting a fault of mechanical equipment.

**Summary of the Invention**

An objective in embodiments of the disclosure is to provide a mobile fault detection method and system for mechanical equipment, so as to solve at least the problem that an existing solution cannot accurately identify a fault based on an acoustic signal generated by mechanical equipment.

In order to realize the above objective, in a first aspect, the disclosure provides a mobile fault detection method for mechanical equipment. The method includes: acquiring a detection signal in an equipment arrangement region in a circulative manner; classifying the detection signal, and selecting a preset fault diagnosis model based on a classification result; extracting a feature from the detection signal to obtain feature information; and training a selected fault diagnosis model based on the feature information, and identifying faulty equipment based on a training result.

Optionally, the detection signal comprises: an acoustic signal and/or a vibration signal generated by target equipment; and position information and an operation process parameter of the target equipment at a current acquisition moment.

Optionally, the operation process parameter comprises one or more of: operation temperature information, pressure information, flow information, or fixation mode information.

Optionally, the acquiring a detection signal in an equipment arrangement region in a circulative manner comprises:

determining a filter limit margin of the target equipment based on the position information and the operation parameter of the target equipment at the current acquisition moment;
determining an actual filter limit of the target equipment based on the filter limit margin and a preset basic filter limit; and
acquiring the detection signal from the target equipment based on the actual filter limit.

Optionally, the determining a filter limit margin of the target equipment based on the position information and the operation parameter of the target equipment at the current acquisition moment comprises:

determining distance information between a position at the current acquisition moment and the target equipment based on the position information at the current acquisition moment;
determining prediction information for the detection signal of the target equipment based on the operation parameter of the target equipment; and
determining the filter limit margin of the target equipment based on the distance information and the prediction information for the detection signal; wherein

the prediction information for the detection signal comprises one or more of the following for predicting the detection signal:

a predicted amplitude, frequency, or wavelength.

Optionally, the determining the filter limit margin of the target equipment based on the distance information and the prediction information for the detection signal comprises:

determining an attenuation rule of the prediction information for the detection signal based on the distance information;

determining prediction information for the detection signal of the position at the current acquisition moment based on the attenuation rule; and

determining the filter limit margin of the target equipment based on the prediction information for the detection signal of the position at the current acquisition moment.

Optionally, the classifying the detection signal comprises:

determining a relation between intensity of the acoustic signal currently acquired and minimum intensity of a preset acoustic signal, and a relation between intensity of the vibration signal currently acquired and that of a preset vibration signal separately, and classifying the detection signal based on a determination result; wherein

the classification result of the current detection signal indicates the vibration signal in a case that the intensity of the acoustic signal currently acquired is less than the minimum intensity of the preset acoustic signal, but the intensity of the vibration signal is not less than that of the preset vibration signal;

the classification result of the current detection signal indicates the acoustic signal in a case that the intensity of the acoustic signal currently acquired is not less than the minimum intensity of the preset acoustic signal, but the intensity of the vibration signal is less than that of the preset vibration signal;

the classification result of the current detection signal indicates a fused signal of the vibration signal and the acoustic signal in a case that the intensity of the acoustic signal currently acquired is not less than the minimum intensity of the preset acoustic signal, and the intensity of the vibration signal is not less than that of the preset vibration signal; and

the signals currently acquired do not satisfy an expectation, and a signal acquisition position is adjusted to re-acquire a detection signal in a case that the intensity of the acoustic signal currently acquired is less than the minimum intensity of the preset acoustic signal, and the intensity of the vibration signal is less than that of the preset vibration signal.

Optionally, the preset fault diagnosis model comprises:
a fault diagnosis model based on the acoustic signal, a fault diagnosis model based on the vibration signal, and a fused fault diagnosis model based on the acoustic signal and the vibration signal.

Optionally, the selecting a preset fault diagnosis model based on a classification result comprises:

selecting the fault diagnosis model based on the vibration signal as the preset fault diagnosis model in a case that the classification result indicates the vibration signal;

selecting the fault diagnosis model based on the acoustic signal as the preset fault diagnosis model in a case that the classification result indicates the acoustic signal; and

selecting the fused fault diagnosis model based on the acoustic signal and the vibration signal as the preset fault diagnosis model in a case that the classification result indicates the fused signal.

Optionally, in a case that the preset fault diagnosis model is the fused fault diagnosis model based on the acoustic signal and the vibration signal, the extracting a feature from the detection signal to obtain feature information comprises:

extracting the feature from the detection signal based on a preset empirical mode decomposition (EMD) algorithm, and fusing the extracted feature to obtain a fused feature vector set; and

performing fault word substitution on each fused feature vector in the fused feature vector set based on a preset fused bag-of-words, so as to obtain a word evaluation set as the feature information.

Optionally, the extracting the feature from the detection signal based on the preset EMD algorithm, and fusing the extracted feature to obtain a fused feature vector set comprises:

performing EMD on the acoustic signal and the vibration signal that are synchronously acquired to obtain a plurality of signal components of each signal;

performing Hilbert-Huang transform (HHT) on each signal component to obtain an instantaneous frequency and an instantaneous amplitude of each signal component; and

comparing the instantaneous frequency of the signal component of the acoustic signal with the instantaneous frequency of the signal component of the vibration signal, adding instantaneous amplitudes corresponding to same instantaneous frequency points of the acoustic signal and the vibration signal to obtain a plurality of fused signals, and constructing a corresponding time-frequency matrix as the fused feature vector set.

Optionally, the preset fused bag-of-words comprises: a fault word substitution model configured to perform the fault word substitution on the fused feature vector; and a preset codebook configured to record a correspondence relation between a word frequency vector and a fault cause.

Optionally, further comprising:
constructing a fault word substitution model as follows:

acquiring a detection signal of the mechanical equipment in a fault state from historical data, and alternatively, acquiring a detection signal of the mechanical equipment calibrated with a fault state in an operation state, and taking the detection signal as basic data;

extracting a feature from the basic data, and fusing the feature to obtain a fused feature vector training set; and clustering the fused feature vector training set based on a preset clustering algorithm to obtain a plurality of clustering centers, and performing fault word calibration on each clustering center to obtain the fault word substitution model.

Optionally, the training the selected fault diagnosis model based on the feature information, and identifying faulty equipment based on the training result comprise:

importing the word evaluation set and the operation process parameter of the target equipment into the fused fault diagnosis model based on the acoustic signal and the vibration signal as input parameters;

counting an occurrence frequency of a fault word based on a preset clustering algorithm;

acquiring the corresponding word frequency vector based on a counting result of the occurrence frequency of the fault word; and

identifying the fault cause according to the preset codebook based on the word frequency vector.

Optionally, the fault diagnosis model further comprises: a position identification model of the faulty equipment; and

the identifying faulty equipment based on the training result further comprises:
identifying a position of the faulty equipment as follows:

acquiring acoustic signals to be identified in a predetermined acquisition region in a circulative manner, and recording acquisition position information of each acoustic signal to be identified at an acquisition moment, so as to obtain a plurality of correspondence relations between acoustic signals to be identified and the acquisition position information; and

training the position identification model of the faulty equipment with all acoustic signals to be identified and the corresponding acquisition position information as input parameters, so as to obtain position information of the faulty equipment.

Optionally, the acquiring acoustic signals to be identified in a predetermined acquisition region in a circulative manner comprises:

taking the mechanical equipment as a starting point, and acquiring the acoustic signals to be identified in a linearly-circulative manner in any two opposite directions until circulation is executed to a position having a preset maximum distance from the mechanical equipment; wherein

an acquisition position of each acoustic signal to be identified varies, and a distance between acquisition positions of any two adjacent acoustic signals to be identified is identical; and

at the acquisition position of each acoustic signal to be identified, the plurality of acoustic signals to be identified are synchronously acquired through a plurality of channels.

Optionally, the recording acquisition position information of each acoustic signal to be identified at an acquisition moment comprises:

reading laser navigation data at a current acquisition position to which circulation is executed in response to an acoustic signal acquisition trigger signal;

reading first acquisition position candidate information of the current acquisition position based on the laser navigation data;

reading Beidou location information of the current acquisition position in response to the acoustic signal acquisition trigger signal;

reading second acquisition position candidate information of the current acquisition position based on the Beidou location information; and

correcting the current acquisition position based on the first acquisition position candidate information and the second acquisition position candidate information to obtain the acquisition position information.

Optionally, further comprising:

obtaining acoustic field nephogram information of each frequency band in each acoustic frequency segment, and comparing the acoustic field nephogram information of each frequency band with preset standard acoustic field nephogram information to obtain an acoustic field nephogram deviation of each frequency band;

obtaining a total deviation matrix based on the acoustic field nephogram deviation of each frequency band;

training a preset acoustic field fault identification model with the total deviation matrix as an input parameter to obtain an equipment abnormality result under a current working condition; and

comparing the equipment abnormality result obtained based on the acoustic field fault identification model with an equipment abnormality result obtained based on the fault diagnosis model, and verifying the equipment abnormality result obtained based on the fault diagnosis model.

In a second aspect, the disclosure provides a mobile apparatus for detecting a fault of mechanical equipment. The apparatus includes: a signal acquisition robot configured to acquire a detection signal in an equipment arrangement region in a circulative manner; a processing unit configured to classify the detection signal, and select a preset fault diagnosis model based on a classification result; and extract a feature from the detection signal to obtain feature information; and a training unit configured to train a selected fault diagnosis model based on the feature information, and identify faulty equipment based on a training result.

Optionally, the detection signal comprises:

an acoustic signal and/or a vibration signal generated by target equipment; and

position information and an operation process parameter of the target equipment at a current acquisition moment.

Optionally, the signal acquisition robot comprises: an acquisition module, comprising:

a plurality of acoustic signal acquisitors arranged in a circular array and configured to synchronously acquire an acoustic signal generated by target mechanical equipment;

a laser vibration meter configured to project a laser for vibration measurement onto the target mechanical equipment, and acquire a corresponding vibration signal;

an advancement module configured to drive a routine inspection robot to move for routine inspection; and

a navigation module configured to avoid an obstacle in a moving process of the routine inspection robot.

In a third aspect, the disclosure provides a mobile system for detecting a fault. The system includes the above mobile apparatus for detecting a fault of mechanical equipment.

In a fourth aspect, the disclosure provides a computer-readable storage medium. The computer-readable storage medium stores an instruction, where when run on a computer, the instruction causes the computer to execute the above mobile fault detection method for mechanical equipment.

Through the above technical solutions, the signal is acquired in the circulative manner in the solution of the disclosure. An influence of a spatial signal acquisition position on the signal feature is fully considered, and recording of a signal acquisition position and acquisition of an operation process parameter of the equipment are synchronously carried out. Precision of fault detection is improved by selecting the corresponding model based on a type of the signal. The faulty equipment is precisely identified by providing a spatial location solution for the faulty equipment.

Other features and advantages in the embodiments of the disclosure will be described in detail in the following particular embodiments.

## Brief Description of Drawings

The accompanying drawings, used to provide further understanding of embodiments of the disclosure, constitute part of the description, and serve to explain the embodiments of the disclosure along with the following particular embodiments, instead of limiting the embodiments of the disclosure. In the accompanying drawings:

Fig. 1 is a flowchart of steps of a mobile fault detection method for mechanical equipment according to an embodiment of the disclosure;

Fig. 2 is a flowchart of steps in Example 2 according to an embodiment of the disclosure;

Fig. 3 is a flowchart of steps in Example 3 according to an embodiment of the disclosure; and

Fig. 4 is a structural diagram of a mobile fault detection apparatus for mechanical equipment according to an embodiment of the disclosure.

**Detailed Description of the Embodiments**

Particular embodiments of the disclosure are described in detail below in combination with the accompanying drawings. It should be understood that the particular embodiments described herein are merely to illustrate and explain the disclosure, and are not intended to limit the disclosure.

A smart factory indicates a new stage in the development of modern factory informatization. On the basis of a digital factory, information management and service are strengthened through the Internet of Things and equipment monitoring. Thus, the production and marketing process is clearly grasped, controllability of the production process is improved, manual interference in the production line is reduced, the production line data are acquired correctly in time, and the production plan and production schedule are rationally arranged. With integration of emerging technologies such as the green and intelligent means and the intelligent system, an efficient, energy-saving, green, environment-friendly, and comfortable people-friendly factory is constructed. The smart factory leads the development of future factories. The research is directed to intelligent fault monitoring of production equipment. The operation stability of the production equipment can be intelligently monitored only based on intelligent fault monitoring of the equipment. It is essential to ensure stable production for production control in any case.

According to an existing fault detection technology for equipment, a vibration state signal of the equipment during operation is acquired mainly depending on manual routine inspection, and then a fault of the equipment is detected based on the vibration signal acquired. The method has a high manual investment cost, and thus is not adapted to the development of current smart factory. Moreover, the equipment is in an abnormal vibration state only after a large fault is formed. Thus, accuracy of fault identification obtained through the method is defective. In addition to manual routine inspection, an online monitoring system based method for monitoring a fault of equipment is also available at present. However, the method requires a large number of hardware equipment to be arranged. A high system construction cost will be generated because more hardware equipment has to be arranged for large-scale monitoring.

The mechanical equipment, motive power for production, is used in production workshops in an extensive range. During operation, the mechanical equipment generates an acoustic after vibrates. In a case of a fault in the equipment, an acoustic signal generated will also change. Acoustic signal types vary with fault types. Thus, it is worth researching the corresponding fault type inference based on the acoustic signal. By acquiring the acoustic signal through a machine and analyzing a frequency, intensity, etc. of the acoustic signal, it is possible to infer the current fault type of the equipment reversely. However, with diversified construction, the mechanical equipment has different structures and power output modes, and differentiated acoustic signals generated. No solution that can detect faults of all mechanical equipment based on one acoustic identification method has been provided yet. Aiming at the defects in the existing method, the solution of the disclosure provides a new method for identifying an abnormality of equipment based on acoustic signal monitoring. Aiming at different structural properties and power output modes of the mechanical equipment, different methods for analyzing acoustic signals are formulated. A system adaptively selects the method for analyzing according to the acoustic signal acquired. Thus, the capacity of the system to analyze the acoustic signals in different scenes is enhanced, accuracy of fault identification is improved, and intelligence of the method for identifying a fault based on the acoustic signal is strengthened.

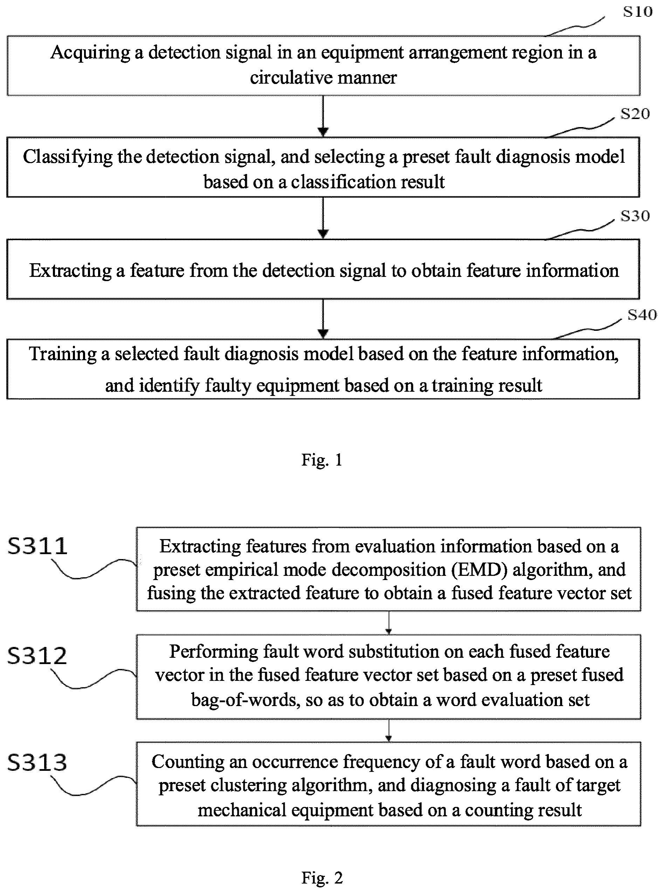

Fig. 1 is a flowchart of a mobile fault detection method for mechanical equipment according to an embodiment of the disclosure. As shown in Fig. 1, a mobile fault detection method for mechanical equipment is provided in an embodiment of the disclosure. The method includes the following S10-S40.

S 10: acquiring a detection signal in an equipment arrangement region in a circulative manner.

According to the solution of the disclosure, the fault is detected based on an acoustic signal and/or a vibration signal. Generally, the fault is inferred based on feature information generated by the mechanical equipment, instead of disassembling the mechanical equipment for a targeted fault check. The method is advantageous is that it is not required to interfere in the operation process of the mechanical equipment, so that the information is conveniently acquired, and normal operation of the equipment is not affected. During the normal operation, the mechanical equipment vibrates slightly and generates a small noise. In a case of the fault, such as bearing wear, misalignment, imbalance, mechanical looseness, shaft displacement, and foundation looseness, a balance state designed for the mechanical equipment is broken. In consequence, the mechanical equipment has unnecessary collision and friction noises, and thus generates the corresponding vibration signals. Acoustic and vibration signals vary with failure modes. For example, a vibration frequency in a case of shaft asymmetry is lower than a frequency in a case of bearing wear. Just according to a corresponding mapping relation between output information and a corresponding fault state, the corresponding fault of the mechanical equipment can be identified based on the output information acquired, i.e. the acoustic signal and the vibration signal.

In view of the above, the acoustic signal and the vibration signals need to be acquired correspondingly when the signal is acquired in the circulative manner. When the acoustic signal is acquired, acoustics generated by a large quantity of mechanical equipment during operation, and other background acoustics such as ambient acoustics and manual operation acoustics often exist in the production workshop. In order to implement the solution of the disclosure, it is vital to extract an operation acoustic of target mechanical equipment from a large number of acoustics that are mixed together. Preferably, in order to extract the operation acoustic of the target mechanical equipment, a method for acquiring an acoustic in a circulative manner is provided in the solution of the disclosure. Moreover, an acoustic acquisition robot is preset, which can move and circulate in the production workshop, so as to acquire the acoustic in a circulation process.

In an example of the disclosure, the acquisition robot is designed. Thus, the number of acquisition equipment can be reduced, and as long as an advancement route of the acquisition robot is preset, the acquisition robot can complete the task of large-scale acoustic detection independently. Accordingly, the problem that a large number of hardware equipment needs to be arranged in the workshop according to traditional equipment is avoided, and large-scale detection is facilitated. Moreover, a position of the mechanical equipment is fixed, and attenuation of the acoustic on a propagation path is inevitable. Thus, as long as a relative distance between the acquisition robot and the target mechanical equipment is changed, in combination with the corresponding acoustic propagation rule the acoustic generated by the target mechanical equipment and conforming to the movement rule can be well identified from a number of acoustics. For example, with the target mechanical equipment as a starting point, the acquisition robot moves away from the mechanical equipment gradually. A distance value between the target mechanical equipment and the acquisition robot is identical to a movement value of the acquisition robot. A distance between another piece of deviated mechanical equipment and the acquisition robot needs to undergo deviated conversion. As long as the acoustic attenuation rule is inferred according to the movement distance of the acquisition robot, it is easy to identify the acoustic of the corresponding target mechanical equipment from a number of acoustics.

In another possible embodiment, the acquisition robot includes a plurality of acoustic acquisition channels, and these acoustic acquisition channels are arranged in different positions and directions. On the premise that the relative position of the mechanical equipment and the acquisition robot is fixed, the rule that the acoustic generated only by the mechanical equipment satisfies multi-channel acoustic acquisition conforms to the expectation. For example, positions of a point A and a point B are fixed, the acquisition robot is positioned at the point A and faces the point B, and the target mechanical equipment is positioned at the point B. A position and orientation of a multi-channel acoustic acquisition module of the acquisition robot are fixed. On the premise that the acoustic propagation rule is satisfied, the acoustic from the point B to the point A in each orientation has uniqueness. Based on the uniqueness, the operation acoustic of the target mechanical equipment can be identified.

Based on the above rule, the acquisition robot determines the corresponding target mechanical equipment at first, then determines the specific position of the equipment, and drives the acquisition robot with the specific position as a target position, so that the acquisition robot is circulated to the position of the target mechanical equipment. With the mechanical equipment to be identify as a starting point, acoustic information to be identified is acquired in a linearly-circulative manner in any two opposite directions until the acquisition robot is circulated to a position having a preset maximum distance from the mechanical equipment to be identified. A plurality of pieces of acoustic information is synchronously acquired through the plurality of channels at each acoustic acquisition position. An acquisition position of each acoustic information to be identified varies, and a distance between acquisition positions of any two adjacent pieces of acoustic information to be identified is identical. At each acoustic acquisition position, the plurality of pieces of acoustic information is synchronously acquired through the plurality of channels.

Specifically, for acquisition of the vibration signal, a traditional method for acquiring a vibration signal principally depends on contact type vibration signal acquisition. It is required to perform contact connection between a sensor for acquiring the vibration signal and the mechanical equipment generating vibration. Then, the sensor and the mechanical equipment vibrate with a same feature, so that the corresponding vibration signal is acquired. However, the technical effect to be realized by the solution of the disclosure is that the vibration signal is acquired in the circulation process, and in other words, the signal acquisition robot is moving. If the vibration signal is acquired through the traditional method, it is required to ensure that the acquisition robot has a fixed position, and makes contact with the mechanical equipment, which is contrary to the initial objective of the disclosure.

Example 1

In a case of processing non-contact vibration signal acquisition, another method for acquiring a vibration signal is provided in the solution of the disclosure. In other words, the vibration signal of the mechanical equipment is directly acquired by making contact with the mechanical equipment. In the embodiment, a corresponding acquisition mechanical arm for acquring the vibration signal is arranged on the acquisition robot. The mechanical arm can make overlapping contact with the mechanical equipment, and then directly acquire the corresponding vibration signal in a vibration process of the mechanical equipment. The vibration signal of the mechanical equipment is directly acquired by the acquisition mechanical arm. Since no corresponding signal conversion is required, accuracy of the vibration signal acquired is higher. Moreover, the acquisition robot can stop temporarily when arriving at each piece of mechanical equipment in a circulation process to acquire the vibration signal. Thus, circulative monitoring on the mechanical equipment will not be greatly affected in essence.

In order to avoid such a situation, preferably, in the solution of the disclosure, the vibration signal is acquired based on a laser vibration meter, so that non-contact vibration signal acquisition is realized. The laser vibration meter is a type of measurement instrument for measuring vibration of an object based on the laser Doppler effect, optical heterodyne interference, etc. Compared with a traditional accelerometer, etc., the laser vibration meter is advantageous in long-distance measurement, non-contact, high spatial resolution, short measurement time, a wide response frequency band, and high velocity resolution, and thus is used in mode characteristic analysis of models, quality inspection, online control, structural flaw detection, and health care in an extensive range.

In a possible embodiment, an OptoMET digital laser Doppler vibration meter, a high-precision vibration measurement instrument, is provided on the acquisition robot. The instrument can provide non-contact and precise measurement of the vibration signal and the acoustic signal, including vibration displacement, velocity, and acceleration. With ultra-high optical sensitivity and an independently-developed ultra digital signal processing (UltraDSP) technology, the instrument can not only measure vibration of a simple system rapidly, but can also measure a challenging system, including high-frequency vibration, long-distance testing, a small vibration amplitude, high linearity, and high vibration acceleration or velocity. The ultra digital signal processing (UltraDSP) technology ensures high resolution and high precision of the measurement. The OptoMET laser vibration meter has excellent linearity, and a wide test frequency band that can be up to 10 MHz at most.

S20: classifing the detection signal, and selecting a preset fault diagnosis model based on a classification result.

Specifically, in order to train different fault identification models for different working conditions, so as to obtain the most accurate fault diagnosis results in the corresponding scenarios, there are three fault diagnosis models in the solution of the disclosure, i.e. a fault diagnosis model based on the acoustic signal, a fault diagnosis model based on the vibration signal, and a fused fault diagnosis model based on the acoustic signal and the vibration signal. The three models correspond to three different working conditions that are differentiated from one another based on features of the detection signals. In order to ensure that the signals acquired can be used for processing, signal intensity must satisfy requirements. The corresponding classification is performed based on the intensity of the detection signal in the solution of the disclosure.

Specifically, a relation between intensity of the acoustic signal currently acquired and minimum intensity of of a preset acoustic signal, and a relation between intensity of the vibration signal currently acquired and that of a preset vibration signal are determined separately, and the detection signal is classified based on a determination result; where the classification result of the current detection signal indicates the vibration signal in a case that the intensity of the acoustic signal currently acquired is less than the minimum intensity of the preset acoustic signal, but the vibration signal is not less than intensity of the preset vibration signal; the classification result of the current detection signal indicates the acoustic signal in a case that the intensity of the acoustic signal currently acquired is not less than that the minimum intensity of the preset acoustic signal, but the intensity of the vibration signal is less than that of the preset vibration signal; the classification result of the current detection signal indicates a fused signal of the vibration signal and the acoustic signal in a case that the intensity of the acoustic signal currently acquired is not less than the minimum intensity of the preset acoustic signal, and the intensity of the vibration signal is not less than that of the preset vibration signal; and the signals currently acquired do not satisfy an expectation, and a signal acquisition position is adjusted to re-acquire a detection signal in a case that the intensity of the acoustic signal currently acquired is less than the minimum intensity of the preset acoustic signal, and the intensity of the vibration signal is less than that of the preset vibration signal.

When the classification result indicates the vibration signal, the preset fault diagnosis model correspondingly selected is the fault diagnosis model based on the vibration signal. When the classification result indicates the acoustic signal, the preset fault diagnosis model correspondingly selected is the fault diagnosis model based on the acoustic signal. When the classification result indicates the fused signal, the preset fault diagnosis model correspondingly selected is the fused fault diagnosis model based on the acoustic signal and the vibration signal.

S30: extracting a feature from the detection signal to obtain feature information.

Specifically, different fault diagnosis models require different input parameters. Thus, different feature information is correspondingly required in a case of signal processing. In view of the above, various conditions are generated during fault diagnosis.

Example 2

When the preset fault diagnosis model is the fused fault diagnosis model based on the acoustic signal and the vibration signal, the step that features are extracted from the detection signal to obtain feature information includes: the features are extracted from the detection signal based on a preset empirical mode decomposition (EMD) algorithm, and the extracted features are fused so as to obtain a fused feature vector set; and fault word substitution is performed on each fused feature vector in the fused feature vector set based on a preset fused bag-of-words, so as to obtain a word evaluation set as the feature information.

Specifically, as shown in Fig. 2, the step includes the following S311-S313.

S311: extracting features from evaluation information based on the preset EMD algorithm, and fusing the extracted features to obtain the fused feature vector set.

Specifically, the solution of the disclosure is not to simply identify the respective faults based on the acoustic signal and the vibration signal, and then determine a final fault identification solution based on comparison of the identification results. Although the method can ensure accuracy of identification to a certain extent, comparison of two kinds of data cannot accurately determine that any kind of data has an error, and repeated calculation is required to eliminate accidental errors. Thus, the system has to repeat a same determination step multiple times, which prolongs the time required for fault identification. In consequence, efficiency of routine inspection in the solution of performing workshop fault routine inspection is greatly affected.

In addition, owing to the background noise in a complex background environment and a mutual correlation influence between various structural members, a signal-to-noise ratio of a noise signal or the vibration signal is low, resulting in fuzzy feature orientation or low accuracy of diagnosis and determination. This results in low accuracy corresponding to fault identification only based on the acoustic signal or the vibration signal. In the solution of the disclosure, in order to avoid such a situation, coherent correlation for multi-feature diagnosis is established by comparing the correlation of noise diagnosis feature information and vibration diagnosis feature information, so that fused determination of the fault and vibration-noise correlation of the diagnosis feature is established.

Specifically, the essence of the acoustic signal and the vibration signal is the same. Theoretically, the fault diagnosis result based on the acoustic signal should be consistent with the fault diagnosis result based on the vibration signal. By analyzing the correlation of the two signals, and then fusing the signal acquired, accuracy of the identification result can be greatly improved, and robustness of the system can be enhanced. In the solution of the disclosure, the correlation of the two signals is discussed based on a coherence function. The coherence function is an essential function for describing a correlation degree between an input signal and an output signal of the system in a frequency domain. Thus, a causal relation between the two signals can be measured to correspond to the correlation analysis of the system in a time domain. Specifically:

$$\gamma_{iy}{}^2(f) = \frac{\left|H_{iy}(f)\right|^2 G_{ii}(f)}{G_{yy}(f)} = \frac{\left|G_{iy}(f)^2\right|}{G_{ii}(f)G_{yy}(f)}$$

$$i = 1, 2, \cdots, q \quad 0 \le \gamma_{iy}{}^2(f) \le 1$$

In the function, f denotes a frequency, $H_{iy}(f)$ denotes a frequency response function from an input signal $x_i(f)$ to an output signal $\gamma(f)$, $G_{ii}(f)$ and $G_{yy}(f)$ denote auto-spectra of the input signal and the output signal respectively, and $G_{iy}(f)$ denotes a cross-spectrum of the two signals. Through the correlation analysis of the acoustic signal and the vibration signal, the correlation of the two signals can be known, which can also determine the signal acquired. Thus, the solution of the disclosure includes: correlation characteristic of the acoustic signal and the vibration signal in the corresponding state is analyzed according to historical operation data; then, the acoustic signal and the vibration signal that are currently acquired are analyzed based on the correlation characteristic; whether the acoustic signal and the vibration signal that are currently acquired satisfy the correlation characteristic is determined; and if the correlation characteristic is not satisfied, the signals acquired may not satisfy the expectation, and signals need to be re-acquired. Thus, the inaccurate identification result caused by analyzing incorrect signals is avoided.

Further, in order to further improve accuracy of fault identification of the mechanical equipment, a correlation model of the two signals is constructed, and corresponding signal fusion is subsequently performed. Thus, fault identification is performed based on the fused signal, and accuracy of identification is far higher than that of fault identification based on either of the signals alone. In order to fuse the features, it is required to extract the features from the acoustic signal and the vibration signal respectively, and then fuse the features extracted.

Preferably, in the solution of the disclosure, the step that features are extracted from evaluation information based on the preset EMD algorithm specifically and the extracted features are fused, include: EMD is performed on the acoustic signal and the vibration signal that are synchronously acquired to obtain a plurality of signal components of each signal; Hilbert-Huang transform (HHT) is performed on each signal component, so as to obtain an instantaneous frequency and an instantaneous amplitude of each signal component; and the instantaneous frequency of the signal component of the acoustic signal is compared with the instantaneous frequency of the signal component of the vibration signal, instantaneous amplitudes corresponding to same instantaneous frequency points of the acoustic signal and the vibration signal are added, so as to obtain a plurality of fused signals, and a corresponding time-frequency matrix is constructed as the fused feature vector set.

The empirical mode decomposition (EMD), as a time-frequency domain processing method, has the most significant feature of overcoming the problem that a basis function has no adaptability. Decomposition can be directly performed on an unknown signal segment, without pre-analysis and pre-research. The method can realize hierarchical decomposition automatically according to some fixed patterns, without manual setting and interference. Through the EMD, the plurality of signal components, i.e. intrinsic mode functions (IMFs) are obtained. The intrinsic mode functions have two constraints that a number of limit points and a number of zero crossing points must be identical to each other or differ from each other by one at most within an entire data segment. Moreover, a mean of an upper envelope formed by local maximum points and a lower envelope formed by local minimum points equals zero at any moment. In other words, the upper envelope and the lower envelope are locally symmetric relative to the timeline. Based on the decomposition method, the features can be extracted from the acoustic signal and the vibration signal that are unordered, and then the corresponding feature fusion needs to be performed.

Specifically, the HHT is performed on each signal component at first, which is also a conventional signal stabilization processing solution after an empirical mode transform method. Generally, the acoustic is generated through vibration, so that certain correlation exists between a frequency of the acoustic signal and a vibration frequency. Based on the correlation, a same peak frequency point of the acoustic signal component and the vibration signal component is found, and then signal amplitude superposition is performed based on the point. Thus, it can be ensured that the two signals for fusion are generated by the same equipment simultaneously, and that the fused signal conforms to the actual situation of the equipment. Since there are the plurality of signal components, a plurality of fused signals are provided correspondingly, and the fused feature vector set is formed by these fused signals.

S312: performing fault word substitution on each fused feature vector in the fused feature vector set based on a preset fused bag-of-words, so as to obtain a word evaluation set.

Specifically, the fused feature vector constructed above is an expression form of the signal acquired. It is required to map the expression form with the corresponding fault state. In other words, it is required to perform mapping between the above fused feature vector set and fused feature vector faults based on a mapping relation between the fault state and the information feature. Herein, it is required to apply the fused bag-of-words pre-constructed to conversion from the feature vector and the fault cause.

Preferably, a bag-of-words mode is used in the solution of the disclosure. An occurrence frequency of each fault word is counted through a bag-of-words library, one vector is composed of word frequencies formed, so as to indicate occurrence of the fault. Thus, an overall information calculation amount can be greatly reduced. The bag-of-words is to put all words in a document library into a bag, regardless of morphology and word orders, and in other words, each word is independent. A word in each document is mapped to the word library. If it occurs, 1 is added to the corresponding position, otherwise 0 is shown. Finally, a number at one position indicates a number of occurrence of the word in the document. Since different fused feature vectors may point to different fault causes, it is required to find a word vector with the highest occurrence frequency, and generate a corresponding frequency vector based on an occurrence frequency relation. Thus, a large number of data can be simplified, accuracy of fault cause identification can be ensured while a data calculation amount can be reduced. The bag-of-words satisfies demand of the solution of the disclosure. Evaluation information of the mechanical equipment in a fault state in historical data or evaluation information of the mechanical equipment calibrated with a fault state in an operation state is acquired as basic data. Features are extracted from the basic data and fused, so as to obtain a fused feature vector training set. The fused feature vector training set is clustered based on a preset clustering algorithm to obtain a plurality of clustering centers. Fault word calibration is performed on each clustering center, so as to obtain a fault word substitution model. A corresponding word frequency vector training set is obtained based on the fault word substitution model and the fused feature vector training set. A corresponding codebook is constructed according to the word frequency vector training set based on fault causes recorded in the historical data or calibrated equipment fault causes as a preset codebook.

In a possible embodiment, a k-means algorithm is used to obtain k clustering centers from all feature vectors, and the clustering centers are set as fault words. Then, with the fault words extracted, occurrence frequencies of all fault words in the noise signal and the vibration signal are counted according to a clustering principle, so as to re-construct the fault feature accordingly.

S313: counting an occurrence frequency of the fault word based on the preset clustering algorithm, and diagnosing the fault of the target mechanical equipment based on a counting result.

Specifically, after the word evaluation set is obtained, the corresponding word frequency vector can be obtained. The corresponding fault cause is searched for in the preset codebook with the word frequency vector as a search condition, so as to find a fault state that the current evaluation information most conforms to. Thus, the fault cause identification of the mechanical equipment is completed.

Example 3

The current model is the fault diagnosis model based on the acoustic signal or the vibration signal.

Specifically, in order to facilitate circulation of the acquisition robot, a corresponding laser navigation module is configured. After a target position is determined, an optimal path is planned based on preset map information. Then, advancement guidance and obstacle avoidance operations are performed based on laser navigation data in a circulation process. Since attenuation occurs with the change in acoustic wave propagation distance, intensity is attenuated while a frequency remains unchanged. In order to compensate the acoustic acquired to a certain extent and filter acoustics of other pieces of mechanical equipment, it is required to fuse an acoustic feature acquired with a spatial position feature, so as to extract and enhance a target acoustic in combination with the acoustic propagation rule. Laser navigation data at a current acquisition position to which circulation is executed are read in response to an acoustic information acquisition trigger signal. First acquisition position candidate information of the current acquisition position is read based on the laser navigation data. Beidou location information of the current acquisition position is read in response to the acoustic signal acquisition trigger signal. Second acquisition position candidate information of the current acquisition position is read based on the Beidou location information. The information is corrected based on the first acquisition position candidate information and the second acquisition position candidate information to obtain acquisition position information.

In order to avoid noise interference and remove burst noises, so as to improve accuracy, in the solution of the disclosure, a plurality of pieces of acoustic information to be identified and corresponding position information are acquired. The error is reduced by enlarging a data size. The plurality of data include acquisition data from the acquisition robot at different circulation positions and acoustic data synchronously acquired by a plurality of arrays. In other words, one piece of position information corresponds to a plurality of pieces of acoustic information to be identified, so as to avoid burst noise interference.

Preferably, the acoustic information to be identified includes operation acoustic information of the mechanical equipment to be identified and background acoustic information. The acoustic information includes acoustic intensity information, acoustic frequency-domain feature information, and acoustic waveform information.

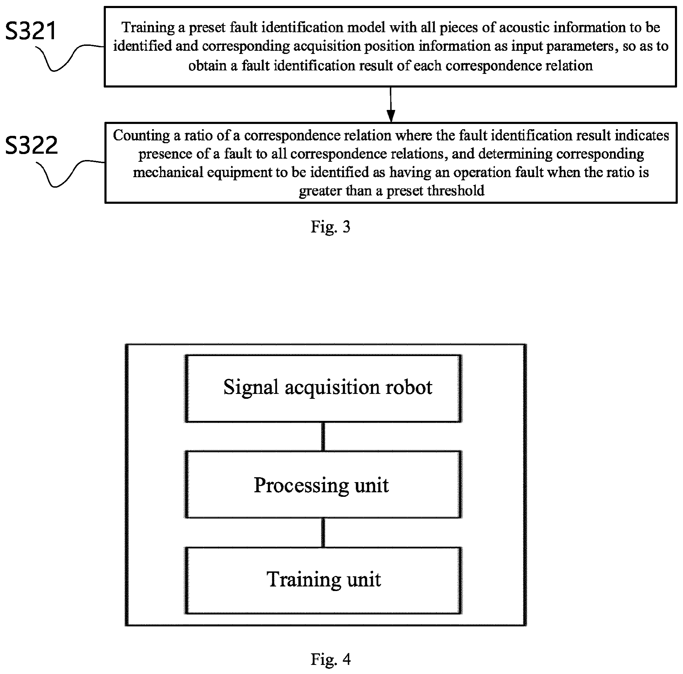

In a possible embodiment, after the target mechanical equipment is identified, the acquisition robot is circulated to a position of the target mechanical equipment to acquire the acoustic in a circulative manner with the mechanical equipment as a starting point in a direction that is easy to move selected. Acoustic information is acquired once when the acquisition robot is away from the mechanical equipment by a fixed distance. Acoustic information is acquired for the last time in a current direction after a preset distance threshold is reached. Then, the acquisition robot is circulated back to the position of the mechanical equipment, and then circulated in a direction other than the originally-selected direction, and repeats an acoustic acquisition operation. For example, acoustic waves are sampled within a range of 1 m, i.e. 50 cm before and after the equipment to be inspected. In order to further improve accuracy, preferably, a sampling frequency is set to be greater than twice a signal frequency, i.e. $fs > 2 \times fn$. Each acoustic wave signal acquired within 1 s is recorded as a waveform datum. In other words, one signal is acquired within 1 s, and stored as one waveform, and then another signal is acquired within 1 s and stored as one waveform. A time stamp at which each waveform starts to be acquired, a position stamp of the position of the robot at the moment, and the waveform datum are jointly taken as input of an algorithm model. Specifically, as shown in Fig. 3,

S321: training a preset fault identification model with all pieces of acoustic information to be identified and the corresponding acquisition position information as input parameters, so as to obtain a fault identification result of each correspondence relation.

Specifically, as seen from the above that the operation state of the mechanical equipment can be reflected through an acoustic change. After the acoustic information and the corresponding position information are acquired, the operation state of the mechanical equipment can be inferred reversely based on the information acquired. Before this, it is required to train the corresponding fault identification model, which can infer whether the mechanical equipment has an operation fault with the acoustic information and the corresponding position information as the input parameters.

Specifically, operation acoustic information of a plurality of pieces of mechanical equipment calibrated with a fault state is acquired. Background acoustic information of the workshop for arranging the plurality of pieces of mechanical equipment and in a state where no mechanical equipment operates is acquired. The fault identification model is trained with the operation acoustic information and the background acoustic information that are acquired as training samples. The operation acoustic information of the mechanical equipment in the fault state may be acoustic information directly acquired from the mechanical equipment in the fault state, or recorded historical information of the mechanical equipment in the fault state. When the data size of the data information is larger, the fault identification model finally obtained through training is more consistent with the expectation. Then, the acquisition position is correspondingly recorded, the acquisition position is bound to the corresponding fault acoustic information, and bound information is taken as training sample data. During model training, some training sample data may be reserved as test data. In other words, the trained model needs to be tested, the model train is tested based on the test data to determine whether an identification result satisfies an expectation.

In another possible embodiment, although corresponding manual maintenance is required after the mechanical equipment has the fault, so as to avoid a larger fault, use demand of the user can be satisfied after the corresponding mechanical equipment in the fault state is identified. However, in order to further improve intelligence of the method, and shorten the time for the user to check the fault, if the user is informed of a certain fault check direction while the mechanical equipment has the operation fault is identified, efficiency of subsequent fault removal can be significantly improved. For the historical data or the mechanical equipment calibrated with the fault state, a fault result and a specific fault changing the acoustic feature are informed. If a relation between the specific fault cause and a unique acoustic feature can be found, the fault cause analysis can be performed to a certain extent based on the acoustic acquired, so as to provide auxiliary information for the user during the fault check. Thus, efficiency of fault detection can be improved. Operation acoustic information of a plurality of pieces of mechanical equipment calibrated with a fault state is acquired, and each piece of acoustic information and a fault type corresponding to the piece of acoustic information is bound. Background acoustic information of the workshop for arranging the plurality of pieces of mechanical equipment and in a state where no mechanical equipment operates is acquired. The fault identification model is trained with a plurality of pieces of acoustic information bound with corresponding fault types and a plurality of pieces of background acoustic information as training samples.

Preferably, during model training, it is also required to train the model through background acoustics, so as to ensure that the model has a function of removing the background acoustics, and that the acoustic finally extracted must be sourced from the target mechanical equipment only.

S322: counting a ratio of the correspondence relation where the fault identification result indicates presence of the fault to all correspondence relations, and determining the corresponding mechanical equipment to be identified as having the operation fault when the ratio is greater than a preset threshold.

Specifically, in order to reduce noise interference, remove burst noises, and improve accuracy, in the solution of the disclosure, whether the fault is present is determined through probability statistics. The probability statistics are performed in two ways.Firstly, in a case of sampled acoustic wave signals with a linear distance, for example, sampled acoustic wave signals before and after the mechanical equipment to be identified by a certain distance (50 cm), i.e. within 1 m, if 95% of signal identification results indicate abnormality, an evaluation result indicates abnormality. Secondly, on a sensor (pickup) array (in other words, an acoustic wave signal acquisition probe may be used for single-channel, dual-channel, or multi-channel array sensing, and a single-channel probability statistics method only offers probability statistics on a linear distance, for dual-channel and or multi-channel array sensing, signals acquired by each sensor and signals acquired from linear distance points form a matrix), if 95% of signal identification results indicate abnormality, an evaluation result indicates abnormality.

S40: training a selected the fault diagnosis model based on the feature information, and identing the faulty equipment based on a training result.

After obtained, the feature data are directly taken as the input parameters, so as to train the fault diagnosis model correspondingly selected, and the fault diagnosis result is obtained based on the model training result.

Preferably, in order to further ensure accuracy of the fault identification result, a solution for verifying the fault diagnosis result is further provided in the solution of the disclosure. Acoustic field nephogram information of each frequency band is obtained in each acoustic frequency segment, and the acoustic field nephogram information of each frequency band is compared with preset standard acoustic field nephogram information to obtain an acoustic field nephogram deviation of each frequency band. A total deviation matrix is obtained based on the acoustic field nephogram deviation of each frequency band. A preset acoustic field fault identification model is trained with the total deviation matrix as an input parameter to obtain an equipment abnormality result under a current working condition. The equipment abnormality result obtained based on the acoustic field fault identification model is compared with an equipment abnormality result obtained based on the fault diagnosis model, and the equipment abnormality result obtained based on the fault diagnosis model is verified.

Specifically, due to superposition performance of acoustic propagation, noises in a complex field environment are often formed by superposing a plurality of acoustic sources. The change in spectral feature of an acoustic generated by the acoustic source, the change in spatial distribution of the acoustic source, and the increase and decrease in number of the acoustic source will change an acoustic waveform acquired at a fixed detection point. In view of the above, in the verification solution provided by the disclosure, noise audio data and acoustic field video data of an inspected object are acquired based on an acoustic imaging technology. Acoustic spectral features and distribution states within a full-frequency range are comprehensively determined through identification and determination of sub-frequency bands. Thus, multi-type abnormal work identification and visual location can be realized more comprehensively, accurately, and intuitively.

Specifically, it is required to acquire the fault identification result of the comparison solution at first. Then, the two fault identification results are compared with each other. If a difference between the two fault identification results satisfies an expectation, it indicates that the fault identification result satisfies the expectation. If a difference between the two fault identification results exceeds an expectation, it indicates that one solution has an identification error. In order to ensure precision of identification, it is required to re-identify the fault. Preferably, a position of the acquisition robot is adjusted to re-identify the fault until the fault identification results of the two solutions satisfy the expectation.

It is required to construct the corresponding fault identification model based on the acoustic field at first in a process of acquiring the result of the comparison solution. When the equipment and devices on site are in a normal operation working condition, a sample library for the normal operation working condition is created through video and audio signals acquired and recorded by an acoustic imaging apparatus. The steps are as follows:

First, a total frequency range [Φmin,Φmax] for acoustic analysis is selected, where Φmax is not greater than 1/2 of a sampling frequency of a microphone. Then, N feature frequency ranges are selected according to noise frequency features in an abnormal working condition of a target, and the total frequency range [Φmin,Φmax] is divided into N ranges, where all the frequency ranges are [Φ1,Φ2], [Φ2,Φ3]..., and [Φ N-1,ΦN] respectively, Φ1=Φmin, and ΦN=Φmax. Finally, a first acoustic frequency range [Φ1,Φ2] is set, and an acoustic field distribution nephogram is calculated. A maximum acoustic source point coordinate $\gamma1[x1,y1]$ is recorded. The acoustic frequency range is further changed to a second acoustic frequency range, a third acoustic frequency range..., and an Nth acoustic frequency range, and the above steps are repeated, so as to obtain sub-frequency band acoustic source point coordinates $\gamma2[x2,y2]$, $\gamma3[x3,y3]$..., and $\gamma N[xN,yN]$. An acoustic energy signal $s(t)$ of a microphone in a microphone array is acquired and stored, and an acoustic signal undergoes Fourier transform, and then is intercepted, so as to obtain spectral density $s(w)$ in the frequency range [Φmin,Φmax]. Total spectral density is filtered according to the N frequency ranges previously set, so as to obtain N pieces of feature spectral density $s_1(w)$, $s_2(w)$,...., $s_N(w)$. A maximum acoustic source point coordinate $\gamma_i[x_i,y_i]$ and the feature spectral density $s_i(w)$ are stored as acoustic feature parameters of an ith frequency band, where i=1, 2, 3,..., and N. An unsupervised identification model is trained and constructed with each piece of feature spectral density $s_i(w)$ as input. The sample library for the normal operation working condition is created with the acoustic feature parameter of each frequency band, the unsupervised identification model, and the acoustic field nephogram video as data.

After the sample library for the normal operation working condition is obtained, in a case of an abnormal operation working condition or a simulation experiment of the abnormal operation working condition performed with a simulation experiment device, an abnormal working condition identification model is trained with the video and audio signals acquired and recorded by the acoustic imaging apparatus. The steps are as follows:

A spectral density sequence $s_1(w)$ within the first frequency range [Φ1,Φ2] for acoustic analysis is selected and input into the unsupervised identification model trained, frequency density $S'_{out}(w)$ is output, and a spectral deviation rate

$$\theta_{s1} = \sum_{w=\Phi_1}^{\Phi_2} \left| S'_{out}(w) - S'(w) \right|$$ is calculated. A maximum acoustic source point coordinate $\gamma'_i[x'_i, y'_i]$ in the

acoustic field nephogram is acquired, and compared a normal coordinate point $\gamma_i\left[x_i, y_i\right]$ within a corresponding frequency range in the sample library for the normal working condition, and an acoustic source coordinate deviation

$$\theta_{\gamma1} = \sqrt{\left(x_i - x_i\right)^2 + \left(y_i - y_i\right)^2}$$ is calculated. An acoustic field nephogram video actually measured is acquired, and compared with an acoustic field nephogram picture in the sample library for the normal working condition frame by frame in terms of image similarity. A mean of similarities of all videos is calculated as an acoustic field nephogram deviation $\theta_{\lambda1}$. A deviation matrix $\theta_1 = [\theta_{s1}, \theta_{\gamma1}, \theta_{\lambda1}]$ of the first frequency range is obtained by combining, the second frequency range to an Mth frequency range are selected in sequence, and the above steps are repeated, so as to obtain a total deviation matrix by summarization.

$$\theta = \begin{bmatrix} \theta_{s1} & \theta_{s2} & \theta_{sN} \\ \theta_{\gamma 1} & \theta_{\gamma 2} \cdots \theta_{\gamma N} \\ \theta_{\lambda 1} & \theta_{\lambda 2} & \theta_{\lambda N} \end{bmatrix}$$

The abnormal working condition identification model is trained and constructed with the total deviation matrix as input and a type number of the abnormal working condition as output.

After acquired, the preset acoustic field fault identification model is trained with the total deviation matrix as an input parameter, so as to obtain the equipment abnormality result under the current working condition. The equipment abnormality result obtained based on the acoustic field fault identification model is compared with the equipment abnormality result obtained based on the fault diagnosis model, and the equipment abnormality result obtained based on the current fault diagnosis model is verified.

Specifically, entropy of an autocorrelation function of a detection signal segment is compared with a preset entropy threshold. If the entropy of the autocorrelation function is not greater than the preset entropy threshold, the fault type of the equipment generating the detection signal segment is a mechanical fault type. If the entropy of the autocorrelation function is greater than the preset entropy threshold, the fault type of the equipment generating the detection signal segment is a fluid dynamics abnormality type. When a current fault type diagnosis model is a mechanical fault diagnosis model, the step that a feature is extracted from the detection signal to obtain feature information includes: fused analysis of singular spectrum and higher-order spectrum is performed on the detection signal, so as to obtain analyzed data as the feature information. When a current fault type diagnosis model is a fluid dynamics fault diagnosis model, the step that a feature is extracted from the detection signal to obtain feature information includes: short-time Fourier transform is performed on the detection signal, so as to obtain a corresponding spectral image as the feature information.

Specifically, the step that the selected fault diagnosis model is trained based on the feature information, and the faulty equipment is identified based on a training result includes: the mechanical fault diagnosis model is trained with the feature information and the operation process parameter as the input parameters, and the training result obtained is taken as a mechanical fault type analysis result. Alternatively, the fluid dynamics fault diagnosis model is trained with the feature information and the operation process parameter as the input parameters, and the training result obtained is taken as a fluid dynamics abnormality type analysis result. A training process of the fluid dynamics fault diagnosis model is disturbed based on an image data enhancement method.

Example 4

Acoustic field nephogram information of each frequency band is obtained in each acoustic frequency segment, and the acoustic field nephogram information of each frequency band is compared with preset standard acoustic field nephogram information to obtain an acoustic field nephogram deviation of each frequency band. A total deviation matrix is obtained based on the acoustic field nephogram deviation of each frequency band. A preset acoustic field fault identification model is trained with the total deviation matrix as an input parameter to obtain an equipment abnormality result under a current working condition. The equipment abnormality result obtained based on the acoustic field fault identification model is compared with an equipment abnormality result obtained based on the fault diagnosis model, and the equipment abnormality result obtained based on the fault diagnosis model is verified.

Specifically, whether it is a mechanical fault type identification result or a fluid dynamics abnormality type identification result, fault type information of the acoustic generated is finally inferred based on corresponding acoustic feature information. The fault type information is directly pushed to a user terminal, so as to assist the user in the corresponding fault identification and check.

Preferably, in order to further ensure accuracy of the fault identification result, a solution for verifying a fault diagnosis result is further provided in the solution of the disclosure. Acoustic field nephogram information of each frequency band is obtained in each acoustic frequency segment, and the acoustic field nephogram information of each frequency band is compared with preset standard acoustic field nephogram information to obtain an acoustic field nephogram deviation of each frequency band. A total deviation matrix is obtained based on the acoustic field nephogram deviation of each frequency band. A preset acoustic field fault identification model is trained with the total deviation matrix as an input parameter to obtain an equipment abnormality result under a current working condition. The equipment abnormality result obtained based on the acoustic field fault identification model is compared with an equipment abnormality result obtained based on the fault diagnosis model, and the equipment abnormality result obtained based on the fault diagnosis model is verified.

Specifically, due to superposition performance of acoustic propagation, noises in a complex field environment are often formed by superposing a plurality of acoustic sources. The change in spectral feature of an acoustic generated by the acoustic source, the change in spatial distribution of the acoustic source, and the increase and decrease in number of the acoustic source will change an acoustic waveform acquired at a fixed detection point. In view of the above, in the verification solution provided by the disclosure, noise audio data and acoustic field video data of an inspected object are acquired based on an acoustic imaging technology. Acoustic spectral features and distribution states within a full-frequency range are comprehensively determined through identification and determination of sub-frequency bands. Thus, multi-type abnormal work identification and visual location can be realized more comprehensively, accurately, and intuitively.

Specifically, it is required to acquire the fault identification result of the comparison solution at first. Then, the two fault identification results are compared with each other. If a difference between the two fault identification results satisfies an expectation, it indicates that the fault identification result satisfies the expectation. If a difference between the two fault identification results exceeds an expectation, it indicates that one solution has an identification error. In order to ensure precision of identification, it is required to re-identify the fault.

It is required to construct the corresponding fault identification model based on the acoustic field at first in a process of acquiring the result of the comparison solution. When the equipment and devices on site are in a normal operation working condition, a sample library for the normal operation working condition is created through video and audio signals acquired and recorded by the acoustic imaging apparatus.

After acquired, the preset acoustic field fault identification model is trained with the total deviation matrix as an input parameter, so as to obtain the equipment abnormality result under the current working condition. The equipment abnormality result obtained based on the acoustic field fault identification model is compared with the equipment abnormality result obtained based on the fault diagnosis model. The equipment abnormal result obtained based on the fault diagnosis model is verified. A final fault diagnosis result is determined after consistency verification of the two abnormality results is passed.

Example 5

A plurality of fault types are manually calibrated, including bearing wear, misalignment, imbalance, mechanical loosening, shaft displacement, foundation loosening, cavitation, and turbulence. For same mechanical equipment, only one fault type is calibrated at a time. Under each fault type, 200 groups of data are acquired in different time periods and background noise. Finally, 200 groups of data are provided for each fault type, there are 1600 groups of data in total, and each group of data include an acoustic signal and a vibration signal. It is further noted that the 1600 groups of data include data acquired at a plurality of preset points, and distances and orientations of the preset points with respect to the mechanical equipment are different. With these data as comparative samples, a plurality of comparative examples are formed as follows:

Comparative Example 1: the fault type of each group of data is hidden, and all data are randomly combined, so as to obtain data group sequences with unknown fault types and unordered sequence numbers. Corresponding fault detection is performed based on a fault detection algorithm matching an existing fixed fault sensor, so as to obtain a diagnosed fault type of each group of data. Then, the fault type hidden and corresponding to the data is displayed, and compared with the diagnosed fault type, so as to obtain 1432 groups of data each having the identical fault types.

Comparative Example 2: the fault type of each group of data is hidden, and all data are randomly combined, so as to obtain data group sequences with unknown fault types and unordered sequence numbers. Fault detection is performed by a simulated fused fault diagnosis model based on the acoustic signal and the vibration signal, so as to obtain a diagnosed fault type of each group of data. Then, the fault type hidden and corresponding to the data is displayed, and compared with the diagnosed fault type, so as to obtain 1553 groups of data each having the identical fault types.

Comparative Example 3: the fault type of each group of data is hidden, and all data are randomly combined, so as to obtain data group sequences with unknown fault types and unordered sequence numbers. Fault detection is performed by a simulated fused fault diagnosis model based on the acoustic signal and the vibration signal, so as to obtain a diagnosed fault type of each group of data, and a detection result is corrected based on an acoustic field nephogram deviation of each frequency band. A corrected detection result is compared with an original result, so as to obtain 1572 groups of data each having the identical fault types.

It can be seen that precision of fault identification by the fused fault diagnosis model based on the acoustic signal and the vibration signal provided in the solution of the disclosure is significantly higher than that of fault diagnosis of an existing traditional single-signal fault algorithm.

Fig. 4 is a structural diagram of a mobile apparatus for detecting a fault of mechanical equipment according to an embodiment of the disclosure. As shown in the Fig. 4, a mobile apparatus for detecting a fault of mechanical equipment is provided in an embodiment of the disclosure. The apparatus includes:

a signal acquisition robot configured to acquire a detection signal in an equipment arrangement region in a circulative manner; a processing unit configured to classify the detection signal, and select a preset fault diagnosis model based on a classification result; and extract a feature from the detection signal to obtain feature information; and a training unit configured to train a selected fault diagnosis model based on the feature information, and identify faulty equipment based on a training result.

Optionally, the signal acquisition robot includes: an acquisition module, including: a plurality of acoustic signal acquisitors arranged in a circular array and configured to synchronously acquire an acoustic signal generated by target mechanical equipment; a laser vibration meter configured to project a vibration measurement laser onto the target mechanical equipment, and acquire a corresponding vibration signal; an advancement module configured to drive a routine inspection robot to move for routine inspection; and a navigation module configured to avoid an obstacle in a moving process of the routine inspection robot.

In a third aspect, the disclosure provides a mobile system for detecting a fault. The system includes the above mobile apparatus for detecting a fault of mechanical equipment.

In a fourth aspect, the disclosure provides a computer-readable storage medium. The computer-readable storage medium stores an instruction, where when run on a computer, the instruction causes the computer to execute the above mobile fault detection method for mechanical equipment.

Those skilled in the art can understand that all or some steps implementing the method in the above embodiment can be accomplished by instructing related hardware through a program. The program is stored in one storage medium and includes several instructions configured to enable a single-chip microcomputer, a chip, or a processor to execute all or some steps of the method in each embodiment of the disclosure. The foregoing storage medium includes various media capable of storing a program code, such as a universal serial bus (USB) flash disk, a mobile hard disk, a read-only memory (ROM), a random access memory (RAM), a magnetic disk, and an optical disk.

The optional embodiments of the disclosure are described in detail above with reference to the accompanying drawings. However, the embodiments of the disclosure are not limited to specific details in the above embodiments. Various simple variations can be made to the technical solutions in the embodiments of the disclosure within the scope of the technical concept in the embodiments of the disclosure, and these simple variations fall within the scope of protection in the embodiments of the disclosure. Also, it should be noted that various specific technical features described in the above particular embodiments can be combined in any suitable way without contradiction. In order to avoid unnecessary repetition, various possible combinations are not described in the embodiments of the disclosure separately.

In addition, various different embodiments of the disclosure can also be combined randomly without departing from the concept in the embodiments of the disclosure, and the combinations should also be deemed as contents disclosed in the embodiments of the disclosure.

**Claims**

1.  A mobile fault detection method for mechanical equipment, comprising:

    acquiring a detection signal in an equipment arrangement region in a circulative manner;
    classifying the detection signal, and selecting a preset fault diagnosis model based on a classification result;
    extracting a feature from the detection signal to obtain feature information; and
    training a selected fault diagnosis model based on the feature information, and identifying faulty equipment based on a training result.

2.  The method according to claim 1, wherein the detection signal comprises:

    an acoustic signal and/or a vibration signal generated by target equipment; and
    position information and an operation process parameter of the target equipment at a current acquisition moment.

3.  The method according to claim 2, wherein the operation process parameter comprises one or more of:
    operation temperature information, pressure information, flow information, or fixation mode information.

4.  The method according to claim 2, wherein the acquiring a detection signal in an equipment arrangement region in a circulative manner comprises:

determining a filter limit margin of the target equipment based on the position information and the operation parameter of the target equipment at the current acquisition moment;
determining an actual filter limit of the target equipment based on the filter limit margin and a preset basic filter limit; and
acquiring the detection signal from the target equipment based on the actual filter limit.

5. The method according to claim 4, wherein the determining a filter limit margin of the target equipment based on the position information and the operation parameter of the target equipment at the current acquisition moment comprises:

determining distance information between a position at the current acquisition moment and the target equipment based on the position information at the current acquisition moment;
determining prediction information for the detection signal of the target equipment based on the operation parameter of the target equipment; and
determining the filter limit margin of the target equipment based on the distance information and the prediction information for the detection signal; wherein
the prediction information for the detection signal comprises one or more of the following for predicting the detection signal:
a predicted amplitude, frequency, or wavelength.

6. The method according to claim 5, wherein the determining the filter limit margin of the target equipment based on the distance information and the prediction information for the detection signal comprises:

determining an attenuation rule of the prediction information for the detection signal based on the distance information;
determining prediction information for the detection signal of the position at the current acquisition moment based on the attenuation rule; and
determining the filter limit margin of the target equipment based on the prediction information for the detection signal of the position at the current acquisition moment.

7. The method according to claim 2, wherein the classifying the detection signal comprises:

determining a relation between intensity of the acoustic signal currently acquired and minimum intensity of a preset acoustic signal, and a relation between intensity of the vibration signal currently acquired and that of a preset vibration signal separately, and classifying the detection signal based on a determination result; wherein
the classification result of the current detection signal indicates the vibration signal in a case that the intensity of the acoustic signal currently acquired is less than the minimum intensity of the preset acoustic signal, but the intensity of the vibration signal is not less than that of the preset vibration signal;
the classification result of the current detection signal indicates the acoustic signal in a case that the intensity of the acoustic signal currently acquired is not less than the minimum intensity of the preset acoustic signal, but the intensity of the vibration signal is less than that of the preset vibration signal;
the classification result of the current detection signal indicates a fused signal of the vibration signal and the acoustic signal in a case that the intensity of the acoustic signal currently acquired is not less than the minimum intensity of the preset acoustic signal, and the intensity of the vibration signal is not less than that of the preset vibration signal; and
the signals currently acquired do not satisfy an expectation, and a signal acquisition position is adjusted to re-acquire a detection signal in a case that the intensity of the acoustic signal currently acquired is less than the minimum intensity of the preset acoustic signal, and the intensity of the vibration signal is less than that of the preset vibration signal.

8. The method according to claim 7, wherein the preset fault diagnosis model comprises:
a fault diagnosis model based on the acoustic signal, a fault diagnosis model based on the vibration signal, and a fused fault diagnosis model based on the acoustic signal and the vibration signal.

9. The method according to claim 8, wherein the selecting a preset fault diagnosis model based on a classification result comprises:

selecting the fault diagnosis model based on the vibration signal as the preset fault diagnosis model in a case that the classification result indicates the vibration signal;
selecting the fault diagnosis model based on the acoustic signal as the preset fault diagnosis model in a case that the classification result indicates the acoustic signal; and
selecting the fused fault diagnosis model based on the acoustic signal and the vibration signal as the preset fault diagnosis model in a case that the classification result indicates the fused signal.

10. The method according to claim 8, wherein in a case that the preset fault diagnosis model is the fused fault diagnosis model based on the acoustic signal and the vibration signal, the extracting a feature from the detection signal to obtain feature information comprises:

extracting the feature from the detection signal based on a preset empirical mode decomposition (EMD) algorithm, and fusing the extracted feature to obtain a fused feature vector set; and
performing fault word substitution on each fused feature vector in the fused feature vector set based on a preset fused bag-of-words, so as to obtain a word evaluation set as the feature information.

11. The method according to claim 10, wherein the extracting the feature from the detection signal based on the preset EMD algorithm, and fusing the extracted feature to obtain a fused feature vector set comprises:

performing EMD on the acoustic signal and the vibration signal that are synchronously acquired to obtain a plurality of signal components of each signal;
performing Hilbert-Huang transform (HHT) on each signal component to obtain an instantaneous frequency and an instantaneous amplitude of each signal component; and
comparing the instantaneous frequency of the signal component of the acoustic signal with the instantaneous frequency of the signal component of the vibration signal, adding instantaneous amplitudes corresponding to same instantaneous frequency points of the acoustic signal and the vibration signal to obtain a plurality of fused signals, and constructing a corresponding time-frequency matrix as the fused feature vector set.

12. The method according to claim 10, wherein the preset fused bag-of-words comprises:

a fault word substitution model configured to perform the fault word substitution on the fused feature vector; and
a preset codebook configured to record a correspondence relation between a word frequency vector and a fault cause.

13. The method according to claim 10, further comprising:
constructing a fault word substitution model as follows:

acquiring a detection signal of the mechanical equipment in a fault state from historical data, and alternatively, acquiring a detection signal of the mechanical equipment calibrated with a fault state in an operation state, and taking the detection signal as basic data;
extracting a feature from the basic data, and fusing the feature to obtain a fused feature vector training set; and
clustering the fused feature vector training set based on a preset clustering algorithm to obtain a plurality of clustering centers, and performing fault word calibration on each clustering center to obtain the fault word substitution model.

14. The method according to claim 12, wherein the training the selected fault diagnosis model based on the feature information, and identifying faulty equipment based on the training result comprise:

importing the word evaluation set and the operation process parameter of the target equipment into the fused fault diagnosis model based on the acoustic signal and the vibration signal as input parameters; counting an occurrence frequency of a fault word based on a preset clustering algorithm;
acquiring the corresponding word frequency vector based on a counting result of the occurrence frequency of the fault word; and
identifying the fault cause according to the preset codebook based on the word frequency vector.

15. The method according to claim 2, wherein the fault diagnosis model further comprises: a position identification model of the faulty equipment; and
the identifying faulty equipment based on the training result further comprises:
identifying a position of the faulty equipment as follows:

acquiring acoustic signals to be identified in a predetermined acquisition region in a circulative manner, and recording acquisition position information of each acoustic signal to be identified at an acquisition moment, so as to obtain a plurality of correspondence relations between acoustic signals to be identified and the acquisition position information; and

training the position identification model of the faulty equipment with all acoustic signals to be identified and the corresponding acquisition position information as input parameters, so as to obtain position information of the faulty equipment.

16. The method according to claim 15, wherein the acquiring acoustic signals to be identified in a predetermined acquisition region in a circulative manner comprises:

taking the mechanical equipment as a starting point, and acquiring the acoustic signals to be identified in a linearly-circulative manner in any two opposite directions until circulation is executed to a position having a preset maximum distance from the mechanical equipment; wherein

an acquisition position of each acoustic signal to be identified varies, and a distance between acquisition positions of any two adjacent acoustic signals to be identified is identical; and

at the acquisition position of each acoustic signal to be identified, the plurality of acoustic signals to be identified are synchronously acquired through a plurality of channels.

17. The method according to claim 15, wherein the recording acquisition position information of each acoustic signal to be identified at an acquisition moment comprises:

reading laser navigation data at a current acquisition position to which circulation is executed in response to an acoustic signal acquisition trigger signal;

reading first acquisition position candidate information of the current acquisition position based on the laser navigation data;

reading Beidou location information of the current acquisition position in response to the acoustic signal acquisition trigger signal;

reading second acquisition position candidate information of the current acquisition position based on the Beidou location information; and

correcting the current acquisition position based on the first acquisition position candidate information and the second acquisition position candidate information to obtain the acquisition position information.

18. The method according to claim 1, further comprising:

obtaining acoustic field nephogram information of each frequency band in each acoustic frequency segment, and comparing the acoustic field nephogram information of each frequency band with preset standard acoustic field nephogram information to obtain an acoustic field nephogram deviation of each frequency band;

obtaining a total deviation matrix based on the acoustic field nephogram deviation of each frequency band;

training a preset acoustic field fault identification model with the total deviation matrix as an input parameter to obtain an equipment abnormality result under a current working condition; and

comparing the equipment abnormality result obtained based on the acoustic field fault identification model with an equipment abnormality result obtained based on the fault diagnosis model, and verifying the equipment abnormality result obtained based on the fault diagnosis model.

19. A mobile fault detection apparatus for mechanical equipment, comprising:

a signal acquisition robot configured to acquire a detection signal in an equipment arrangement region in a circulative manner;

a processing unit configured to:

classify the detection signal, and select a preset fault diagnosis model based on a classification result; and extract a feature from the detection signal to obtain feature information; and

a training unit configured to train a selected fault diagnosis model based on the feature information, and identify faulty equipment based on a training result.

20. The apparatus according to claim 19, wherein the detection signal comprises:

an acoustic signal and/or a vibration signal generated by target equipment; and
position information and an operation process parameter of the target equipment at a current acquisition moment.

21. The apparatus according to claim 19, wherein the signal acquisition robot comprises:
an acquisition module, comprising:

a plurality of acoustic signal acquisitors arranged in a circular array and configured to synchronously acquire an acoustic signal generated by target mechanical equipment;
a laser vibration meter configured to project a laser for vibration measurement onto the target mechanical equipment, and acquire a corresponding vibration signal;
an advancement module configured to drive a routine inspection robot to move for routine inspection; and
a navigation module configured to avoid an obstacle in a moving process of the routine inspection robot.

22. A mobile fault detection system for mechanical equipment, comprising the mobile fault detection apparatus for mechanical equipment according to any one of claims 19-21.

23. A computer-readable storage medium, storing an instruction, wherein when run on a computer, the instruction causes the computer to execute the mobile fault detection method for mechanical equipment according to any one of claims 1-18.

S10

Acquiring a detection signal in an equipment arrangement region in a circulative manner

S20

Classifying the detection signal, and selecting a preset fault diagnosis model based on a classification result

S30

Extracting a feature from the detection signal to obtain feature information

S40

Training a selected fault diagnosis model based on the feature information, and identify faulty equipment based on a training result

Fig. 1

S311

Extracting features from evaluation information based on a preset empirical mode decomposition (EMD) algorithm, and fusing the extracted feature to obtain a fused feature vector set

S312

Performing fault word substitution on each fused feature vector in the fused feature vector set based on a preset fused bag-of-words, so as to obtain a word evaluation set

S313

Counting an occurrence frequency of a fault word based on a preset clustering algorithm, and diagnosing a fault of target mechanical equipment based on a counting result

Fig. 2

S321 | Training a preset fault identification model with all pieces of acoustic information to be identified and corresponding acquisition position information as input parameters, so as to obtain a fault identification result of each correspondence relation

S322 | Counting a ratio of a correspondence relation where the fault identification result indicates presence of a fault to all correspondence relations, and determining corresponding mechanical equipment to be identified as having an operation fault when the ratio is greater than a preset threshold

Fig. 3

Signal acquisition robot

Processing unit

Training unit

Fig. 4

## INTERNATIONAL SEARCH REPORT

| International application No. |
| --- |
| **PCT/CN2024/084972** |

| A. | CLASSIFICATION OF SUBJECT MATTER |
| --- | --- |

G10L25/51(2013.01)i; G01M13/045(2019.01)i; G01M13/028(2019.01)i

According to International Patent Classification (IPC) or to both national classification and IPC

| B. | FIELDS SEARCHED |
| --- | --- |

Minimum documentation searched (classification system followed by classification symbols)

IPC: G10L25/-; G01M13/- CPC: G10L25/51; G01M13/045; G01M13/028

Documentation searched other than minimum documentation to the extent that such documents are included in the fields searched

Electronic data base consulted during the international search (name of data base and, where practicable, search terms used)

CJFD, CNTXT, ENTXT, ENTXTC, VEN, WPABSC: 中国石油化工, 中石化安全工程研究院, 邱枫, 杨哲, 屈定荣, 朱亮, 李明骏, 肖安山, 王浩志, 陈文武, 许述剑, 申志远, 机器人, 巡检, 故障, 振动, 声音, 融合, 信号强度, 最低, 阈值, 衰减, 距离, 间距, 滤波, 有效, 可用, 词袋, 频次, 定位, 偏离, 模型, 训练, 入参, fault, acoustic, vibration, robot, rout+, integration, signal, strength, intensity, threshold, distance, smooth+, location, train+, model, input, EMD, HHT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114462634 A (HUANENG SHANTOU HAIMEN POWER GENERATION CO., LTD.) 10 May 2022 (2022-05-10)<br> description, paragraphs [0025]-[0049] | 1-13, 15-23 |
| Y | CN 115856599 A (CHINA SOUTHERN POWER GRID CO., LTD.) 28 March 2023 (2023-03-28)<br> description, paragraph [0052] | 1-13, 15-23 |
| Y | CN 110188883 A (CHINA MOBILE GROUP HEBEI CO., LTD. et al.) 30 August 2019 (2019-08-30)<br> description, paragraphs [0026]-[0098] | 10-13, 23 |
| Y | CN 111161757 A (MEGATRONIX (BEIJING) TECHNOLOGY CO., LTD.) 15 May 2020 (2020-05-15)<br> description, paragraphs [0070]-[0078] | 15-17, 23 |
| Y | JP 2020134479 A (NIHON DENSAN K. K.) 31 August 2020 (2020-08-31)<br> description, paragraphs [0108]-[0127] | 18,23 |

☑ Further documents are listed in the continuation of Box C.   ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **04 June 2024** | **14 June 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/084972** |

**C. DOCUMENTS CONSIDERED TO BE RELEVANT**

| Category* | Citation of document, with indication, where appropriate, of the relevant passages | Relevant to claim No. |
| --- | --- | --- |
| Y | CN 114297908 A (CHINA HUANENG CLEAN ENERGY RESEARCH INSTITUTE) 08 April 2022 (2022-04-08)<br> description, paragraphs [0032]-[0058] | 18,23 |
| A | CN 110929763 A (XI'AN JIAOTONG UNIVERSITY) 27 March 2020 (2020-03-27)<br> entire document | 1-23 |
| A | CN 109801401 A (DEVELOPMENT CENTER OF NATIONAL LABORATORY FOR MARINE SCIENCE AND TECHNOLOGY (QINGDAO)) 24 May 2019 (2019-05-24)<br> entire document | 1-23 |
| A | CN 105632187 A (SHENZHEN INSTITUTES OF ADVANCED TECHNOLOGY, CHINESE ACADEMY OF SCIENCES) 01 June 2016 (2016-06-01)<br> entire document | 1-23 |
| A | CN 111084614 A (SHENZHEN GLAMOUR TECHNOLOGY CO., LTD.) 01 May 2020 (2020-05-01)<br> entire document | 1-23 |
| A | JP 2002062895 A (NIPPON TELEGRAPH & TELEPHONE CORP.) 28 February 2002 (2002-02-28)<br> entire document | 1-23 |
| A | US 2021096531 A1 (FANUC CORP.) 01 April 2021 (2021-04-01)<br> entire document | 1-23 |

Form PCT/ISA/210 (second sheet) (July 2022)

**INTERNATIONAL SEARCH REPORT**
Information on patent family members

International application No.

**PCT/CN2024/084972**

| Patent document cited in search report | | | Publication date (day/month/year) | Patent family member(s) | | | Publication date (day/month/year) |
|---|---|---|---|---|---|---|---|
| CN | 114462634 | A | 10 May 2022 | None | | | |
| CN | 115856599 | A | 28 March 2023 | None | | | |
| CN | 110188883 | A | 30 August 2019 | None | | | |
| CN | 111161757 | A | 15 May 2020 | None | | | |
| JP | 2020134479 | A | 31 August 2020 | None | | | |
| CN | 114297908 | A | 08 April 2022 | None | | | |
| CN | 110929763 | A | 27 March 2020 | None | | | |
| CN | 109801401 | A | 24 May 2019 | None | | | |
| CN | 105632187 | A | 01 June 2016 | None | | | |
| CN | 111084614 | A | 01 May 2020 | None | | | |
| JP | 2002062895 | A | 28 February 2002 | JP | 3514714 | B2 | 31 March 2004 |
| US | 2021096531 | A1 | 01 April 2021 | JP | 2021056880 | A | 08 April 2021 |
| | | | | JP | 7324110 | B2 | 09 August 2023 |
| | | | | US | 11385617 | B2 | 12 July 2022 |
| | | | | DE | 102020210461 | A1 | 01 April 2021 |
| | | | | CN | 112577591 | A | 30 March 2021 |

Form PCT/ISA/210 (patent family annex) (July 2022)